# EUROPÄISCHE PATENTSCHRIFT

(11) **EP 2 102 547 B1**
(45) Veröffentlichungstag und Bekanntmachung des Hinweises auf die Patenterteilung: **17.11.2010**
(21) Anmeldenummer: 07846937.6
(22) Anmeldetag: 01.12.2007
(51) Int. Cl.: F21V 14/04, B60Q 1/06

(54) **KRAFTFAHRZEUGSCHEINWERFERSYSTEM**
MOTOR VEHICLE HEADLIGHT SYSTEM
SYSTÈME DE PHARES DE VÉHICULES AUTOMOBILES

(30) Priorität: 11.12.2006 DE 102006058212
(43) Veröffentlichungstag der Anmeldung: 23.09.2009
(73) Patentinhaber: Bayerische Motoren Werke Aktiengesellschaft, 80809 München (DE)
(72) Erfinder: AULBACH, Johannes, 85293 Reichertshausen Grafing (DE)
(74) Vertreter: Mayer-Martin, Christian
(86) Internationale Anmeldenummer: PCT/EP2007/010448
(87) Internationale Veröffentlichungsnummer: WO 2008/071315

(56) Entgegenhaltungen:
- EP-A- 1 147 942
- EP-A- 1 595 740
- DE-A1- 10 354 088

## Beschreibung

Die Erfindung betrifft ein Kraftfahrzeugscheinwerfersystem mit einem ersten und einem zweiten Kraftfahrzeugscheinwerfer.

Die rasante technologische Entwicklung auf dem Gebiet der Kraftfahrzeugbeleuchtungstechnik führte in den letzten Jahren zur Integration einer zunehmenden Anzahl von Funktionalitäten in einen Kraftfahrzeugscheinwerfer.

Aus dem Stand der Technik sind, wie in der DE 103 55 747 A1 beschrieben, Kraftfahrzeugscheinwerfer mit zwei lichttechnischen Funktionen bekannt, die von einer Lichtquelle erzeugt werden. Dies sind insbesondere Scheinwerfer mit einer zwischen Abblendlicht und Fernlicht umschaltbaren Leuchtfunktion (so genannte Bi-Funktions-Scheinwerfer). Das Umschalten des Scheinwerfers wird dabei durch Aktivieren verschiedener Glühwendeln der Lampe erreicht. Bei neueren Bi-Funktions-Scheinwerfern wird eine Lichtquelle mit nur einem Leuchtkörper (Glühwendel oder Entladungsbogen) eingesetzt, und das Umschalten durch eine Positionsänderung der Lichtquelle relativ zu dem Reflektor oder durch in den Strahlengang einbringbare Blenden oder Filter bewirkt. Die bekannten technischen Lösungen können sowohl bei Reflexionsscheinwerfern, bei denen das von der Lichtquelle ausgesandte Licht durch den Reflektor auf einen Fahrbahnbereich vor dem Kraftfahrzeug reflektiert wird, als auch bei Projektionsscheinwerfern, bei denen das von dem Reflektor reflektierte Licht über eine Linsenanordnung auf den Fahrbahnbereich vor dem Kraftfahrzeug projiziert wird, Anwendung finden.

Aus der DE 103 54 088 A1 ist ein Kraftfahrzeugscheinwerfer bekannt, bei dem wegen der Kurvenlichtverteilung das Lichtmodul horizontal schwenkbar ist. Das Lichtmodul wird bei hohen Geschwindigkeiten auf der Autobahn vertikal nach oben geschwenkt.

Aus der EP 0 926 431 A1 ist beispielsweise ein Kraftfahrzeugscheinwerfer bekannt, der durch eine Bewegung der Lichtquelle relativ zu dem Reflektor zwischen Abblendlicht und Fernlicht umgeschaltet werden kann. Aus der EP 1 139 011 A1 ist ein Kraftfahrzeugscheinwerfer bekannt, der durch Bewegen eines Infrarot (IR)-Filters in den Strahlengang des von dem Reflektor reflektierten Lichts oder aus diesem heraus zwischen einer ersten Leuchtfunktion, in der der Scheinwerfer sichtbares Licht aussendet, und einer zweiten Leuchtfunktion umgeschaltet werden kann, in der der Scheinwerfer im Wesentlichen nur für das menschliche Auge unsichtbare IR-Strahlung aussendet.

Der Vorteil von Scheinwerfern zur Erzeugung unterschiedlicher Leuchtfunktionen ist insbesondere in der geringen Baugröße zu sehen. Da einerseits die Anzahl der von einer Beleuchtungseinrichtung eines Kraftfahrzeugs zu erzeugenden Leuchtfunktionen immer weiter zunimmt und andererseits der im Frontbereich der Kraftfahrzeuge für den Einbau der Scheinwerfer zur Verfügung stehende Bauraum in den letzten Jahren keinesfalls zugenommen, sondern eher abgenommen hat, wird es in Zukunft einen großen Bedarf für Kraftfahrzeugscheinwerfer geben, die mehrere unterschiedliche Leuchtfunktionen erzeugen können. Während vor einigen Jahren eine Beleuchtungseinrichtung eines Kraftfahrzeugs lediglich eine Begrenzungslicht-, Abblendlicht-, Fernlicht- und u. U. eine Nebellichtfunktion realisieren können musste, werden diese Leuchtfunktionen bereits jetzt und erst recht in der Zukunft durch zusätzliche Leuchtfunktionen ergänzt werden, die von der Beleuchtungseinrichtung ebenfalls erzeugt werden müssen, nach Möglichkeit ohne jedoch zusätzlichen Bauraum im Frontbereich des Kraftfahrzeugs zu beanspruchen.

Zudem sind Kraftfahrzeugscheinwerfer oder Lichtmodule bekannt, welche zur Anpassung an eine kurvige Straßenführung oder im Rahmen einer Leuchtweitenregulierung verschwenkbar oder teilweise verschwenkbar ausgeführt sind. Dazu verfügen die Kraftfahrzeugscheinwerfer über ein oder zwei Motoren, mit denen die optische Scheinwerferachse verstellt werden kann, um eine Kurvenlichtfunktion und/oder eine Leuchtweitenregulierung zu verwirklichen.

Der Erfindung liegt nun die Aufgabe zu Grunde, eine technische Lehre anzugeben, durch die auf wirtschaftliche Weise eine Autobahnlichtverteilung realisiert werden kann.

Diese Aufgabe wird durch die Merkmale des unabhängigen Anspruchs gelöst. Vorteilhafte Weiterbildungen der Erfindung sind den abhängigen Ansprüchen zu entnehmen.

Der Erfindung liegt demnach der Gedanke zu Grunde, eine Autobahnlichtverteilung durch ein Verschwenken einer an sich für einen anderen Zweck vorgesehenen Lichtmodul-Lichtverteilung zu realisieren. Das Verschwenken der Lichtmodul-Lichtverteilung an sich kann dabei ebenso schon für einen anderen Zweck (Leuchtweitenregulierung oder Kurvenlicht) vorgesehen sein. Dadurch kann eine Autobahnlichtverteilung besonders günstig realisiert werden. Eine eigens für die Realisierung der Autobahnlichtverteilung vorgesehene Blende, Linse oder Reflektoreinrichtung ist vorzugsweise nicht erforderlich. Besonders bevorzugt werden zur Realisierung der Autobahnlichtverteilung ein linkes und ein rechtes Lichtmodul verschieden geschwenkt.

Vorzugsweise umfasst ein Kraftfahrzeugscheinwerfersystem einen ersten, insbesondere linken (in Fahrtrichtung), und einen zweiten, insbesondere rechten (in Fahrtrichtung), Kraftfahrzeugscheinwerfer. Die Kraftfahrzeugscheinwerfer weisen jeweils zumindest ein jeweils durch eine Schwenkeinrichtung horizontal und/oder vertikal schwenkbares Lichtmodul, das jeweils eine Lichtmodul-Lichtverteilung realisiert, zur gemeinsamen Realisierung einer Abblendlichtverteilung und gegebenenfalls einer Fernlichtverteilung auf.

Eine Steuereinrichtung ist zur Steuerung zumindest einer der beiden Schwenkeinrichtungen derart eingerichtet, dass durch die Lichtmodule gemeinsam eine Autobahnlichtverteilung realisiert wird. Ein Lichtmodul umfasst dabei beispielsweise zumindest eine der Komponenten Lichtquelle, Reflektor, Linse oder Blende, deren einzelne oder gesamte Verschwenkung zu einer entsprechenden Verschwenkung der Lichtmodul-Lichtverteilung führt.

Beispielsweise wird durch die beiden Lichtmodule samt zugehöriger Lichtmodul-Lichtverteilungen insgesamt eine Landstraßenlichtverteilung oder alternativ eine Autobahnlichtverteilung erzeugt. Zur Realisierung der Autobahnlichtverteilung wird beispielsweise zumindest ein Lichtmodul samt zugehöriger Lichtmodul-Lichtverteilung gegenüber der Ausrichtung zur Erzeugung der Landstraßenlichtverteilung geschwenkt. Eine weitere Änderung oder Anpassung des Lichtmoduls oder des Scheinwerfers ist für die Realisierung einer Autobahnlichtverteilung vorzugsweise nicht erforderlich.

Als besonders vorteilhaft erwies sich in aufwändigen Simulationen und Versuchsfahrten eine Autobahnlichtverteilung, die dadurch entsteht, dass zumindest ein Lichtmodul des ersten Kraftfahrzeugscheinwerfers, insbesondere nach links, geschwenkt wird, insbesondere derart, dass die Lichtmodul-Lichtverteilung gegenüber einer Referenzvertikalen (entspricht beispielsweise der Grundeinstellung des Scheinwerfers bzw. der Scheinwerferausrichtung für Geradeausfahrt beispielsweise bei herkömmlicher Abblendlichtverteilung, insbesondere einer Landstraßenlichtverteilung) um einen Winkel, der zwischen 1 und 6 Grad, 2 und 5 Grad oder 3 und 4 Grad liegt, nach links (in Fahrtrichtung) verschwenkt wird. Denn dadurch wird ein Bereich der Autobahn beleuchtet, der zur Vermeidung der Blendung des Gegenverkehrs in der normalen Abblendlichtverteilung, insbesondere der Landstraßenlichtverteilung, nur schwach beleuchtet wird.

Insbesondere um gesetzgeberische Vorgaben einhalten zu können, erwies es sich bei umfangreichen Tests als vorteilhaft, zumindest ein Lichtmodul, insbesondere das soeben genannte Lichtmodul, des ersten Kraftfahrzeugscheinwerfers zur Realisierung einer Autobahnlichtverteilung, insbesondere nach unten, zu schwenken, insbesondere derart, dass die Lichtmodul-Lichtverteilung gegenüber einer Referenzhorizontalen (entspricht beispielsweise der Grundeinstellung des Scheinwerfers bzw. der Scheinwerferausrichtung für Geradeausfahrt bei Grundeinstellung nach ECE R 48) um einen Winkel, der zwischen 0,1 und 2 Grad, 0,1 und 1 Grad, 0,1 und 0,5 Grad oder zwischen 0,2 und 0,3 Grad liegt, beispielsweise um 0,24 Grad, nach unten geschwenkt wird.

Durch eine Kombination der beiden zuletzt genannten Maßnahmen wird auf wirtschaftliche Art und Weise ein Kraftfahrzeugscheinwerfersystem bereitgestellt, das bei Einhaltung gesetzgeberischer Vorschriften eine insgesamt erhöhte Leuchtweite, insbesondere in dem auf einer Autobahn wichtigen Bereich (ca. 3 Grad links von einer Referenzvertikalen unterhalb einer Horizontalvertikalen), erzeugt.

Besonders bevorzugt ist vorgesehen, alternativ oder ergänzend dazu zumindest ein Lichtmodul des zweiten Kraftfahrzeugscheinwerfers zur Realisierung einer Autobahnlichtverteilung, insbesondere nach oben, zu schwenken, insbesondere derart, dass die Lichtmodul-Lichtverteilung gegenüber der Referenzhorizontalen um einen Winkel, der zwischen 0,1 und 1 Grad, 0,2 und 0,7 Grad oder 0,2 und 0,3 Grad liegt, nach oben geschwenkt wird.

Besonders wirksam sind die oben genannten Maßnahmen in Kombination mit Abblend-Vorrichtungen, die zur Realisierung der Lichtmodul-Lichtverteilungen und zur Realisierung der Autobahnlichtverteilung insgesamt jeweils in einem Strahlengang der Lichtmodule positionierbar sind. Die Blendenkontur kann dabei eine Stufe aufweisen, um eine Blendung des Gegenverkehrs bei der Realisierung der Abblendlichtverteilung zu vermeiden.

Vorzugsweise entspricht die Abblend-Vorrichtung, die zur Erzeugung der Autobahnlichtverteilung eingesetzt wird, hinsichtlich Kontur, Position relativ zum Lichtmodul und/oder Ausrichtung relativ zum Lichtmodul der Abblend-Vorrichtung, die zur Realisierung einer Landstraßenlichtverteilung eingesetzt wird.

Vorzugsweise wird die Realisierung der Autobahnlichtverteilung durch eine oder mehrere der oben genannten Schwenk-Maßnahmen automatisch basierend auf der Kraftfahrzeuggeschwindigkeit und/oder der Kraftfahrzeugposition, die durch entsprechende Einrichtungen ermittelt werden, ausgelöst.

Im Folgenden wird die Erfindung anhand von Beispielen unter Bezugnahme auf die folgenden Figuren näher erläutert:
- Figur 1: zeigt eine schematische Schnittdarstellung eines Teils eines Kraftfahrzeugscheinwerfersystems;
- Figur 2: zeigt eine schematische Darstellung einer Abblend-Vorrichtung;
- Figur 3: zeigt eine schematische Darstellung einer Hell-Dunkel-Grenze;
- Figur 4: zeigt eine schematische Darstellung einer Hell-Dunkel-Grenze.

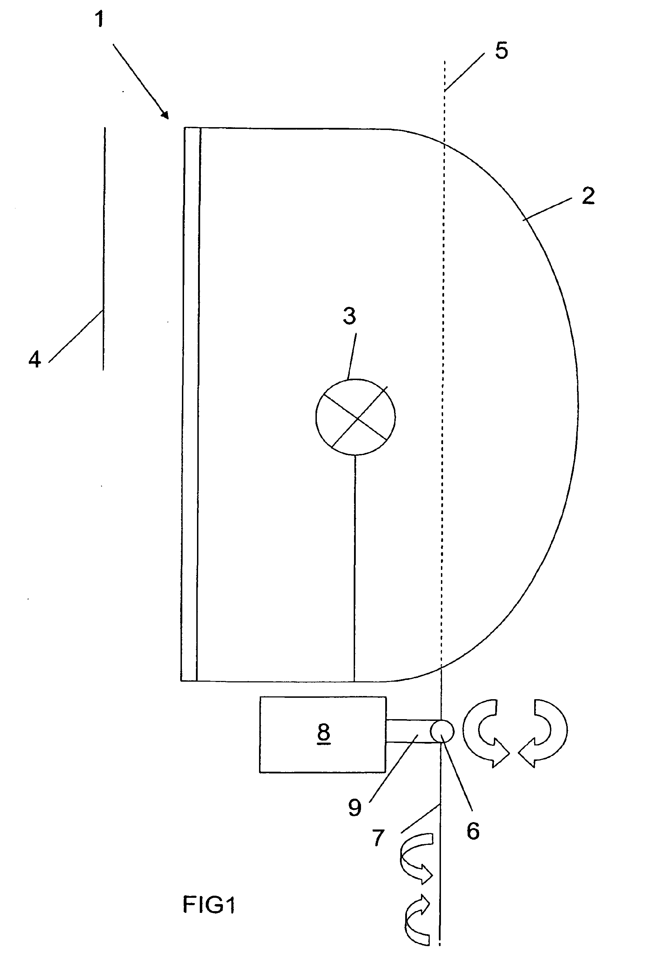

In Figur 1 ist ein Lichtmodul 1 eines Kraftfahrzeugscheinwerfersystems dargestellt, das einen Reflektor und eine Lichtquelle, wie beispielsweise eine Gasentladungslampe, umfasst.

Die Lichtmodul-Lichtverteilung, insbesondere die Abblend-Lichtmodul-Lichtverteilung, eines Lichtmoduls kann auf an sich bekannte Art und Weise beispielsweise durch einen geeigneten Reflektor oder eine geeignete Kombination aus Reflektor und Linse mit oder ohne Blende erzeugt werden. Die Lichtmodul-Lichtverteilung kann aber auch durch eine geeignete Ausführung und Anordnung von LEDs als Lichtquelle erzeugt werden. In diesem Beispiel wird das durch das Lichtmodul 1 abgestrahlte Licht zur Erzeugung einer Lichtmodul-Lichtverteilung, insbesondere der Abblend-Lichtmodul-Lichtverteilung, durch eine vor dem Lichtmodul angeordnete Blende 4 teilweise abgeschattet. Zur Erzeugung einer Fernlichtverteilung wird diese Blende 4 durch einen nicht dargestellten Mechanismus ganz oder teilweise aus dem Strahlengang des Lichtmoduls 1 gezogen oder geschwenkt. Das Lichtmodul 1 wird durch eine Trägereinrichtung 7 getragen. Es kann zudem eine Linse oder eine Projektionseinheit vorgesehen sein. Die Blende 4 kann auch Teil des Lichtmoduls 1 sein.

Das Lichtmodul 1 samt blende 4 und damit die durch das Lichtmodul erzeugte Lichtmodul-Lichtverteilung, insbesondere die Abblend-Lichtmodul-Lichtverteilung, sind durch eine Schwenkeinrichtung 9 um eine vertikale Achse 5 horizontal und um eine horizontale Achse 6 vertikal verschenkbar, um ein Kurvenlicht und eine Leuchtweitenregulierung zu realisieren.

Die Schwenkeinrichtung 9 wird durch eine Steuereinrichtung 8, wie eine programmgesteuerte Prozessoreinrichtung, angesteuert, um mit den Lichtmodulen verschiedene Gesamt-Lichtverteilungen zu realisieren.

Im Folgenden wird davon ausgegangen, dass es sich bei dem Lichtmodul 1 um ein Lichtmodul des linken (in Fahrtrichtung) Kraftfahrzeugscheinwerfers handelt. Analog zur Ausführung dieses Lichtmoduls kann ein entsprechendes Lichtmodul in einem rechten (in Fahrtrichtung) Kraftfahrzeugscheinwerfer vorgesehen sein, das aber durch die Steuereinrichtung 8 anders angesteuert wird.

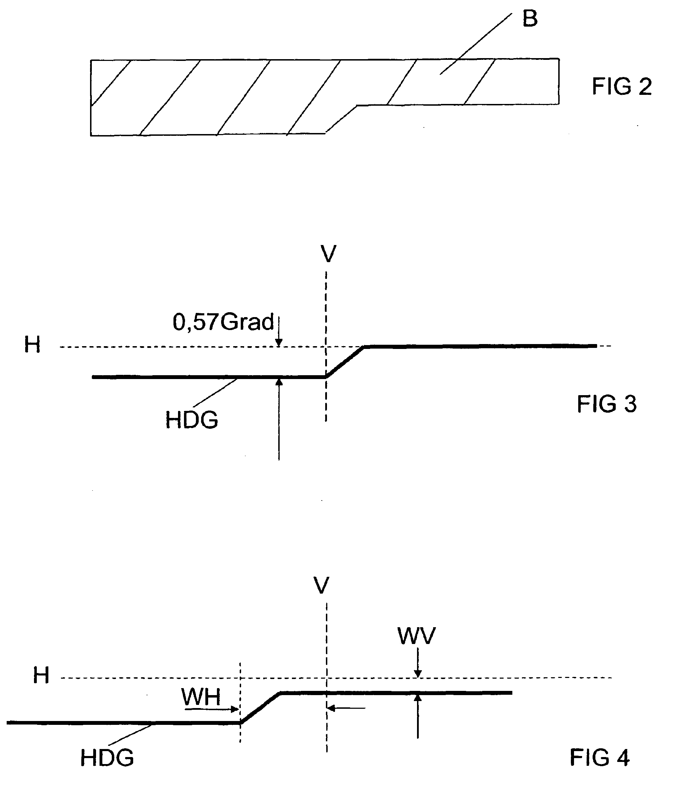

Figur 2 zeigt als exemplarische Ausführung einer Blende 4 aus Figur 1 eine Blende B in Draufsicht mit einer stufenförmigen Blendenkontur, die eine Blendung des Gegenverkehrs verhindert.

Figur 3 zeigt eine Hell-Dunkel-Grenze HDG, die durch eine Blende B aus Figur 2 vor einem (in Fahrtrichtung) Lichtmodul des linken Scheinwerfers erzeugt wird. Eine entsprechende "normale" oder herkömmliche Abblend-Lichtverteilung kann die Blendung des Gegenverkehrs verhindern. Die Stufe der Hell-Dunkel-Grenze HDG definiert in diesem Beispiel eine Referenzvertikale V, und die obere Kante der Hell-Dunkel-Grenze HDG definiert dabei eine Referenzhorizontale H.

Zur Erzeugung einer anderen Abblend-Lichtverteilung, nämlich einer Autobahnlichtverteilung, durch die Blende B wird die Schwenkeinrichtung 9 aus Figur 1 derart angesteuert, dass die Lichtmodul-Lichtverteilung gegenüber der Referenzvertikalen V um einen vorgegebenen Winkel WH nach links geschwenkt wird, und gegenüber einer Referenzhorizontalen H um einen vorgegebenen Winkel WV nach unten geschwenkt wird.

Analog dazu wird eine Schwenkeinrichtung eines Lichtmoduls (nicht dargestellt) eines rechten Scheinwerfers derart angesteuert, dass dessen Lichtverteilung gegenüber einer Referenzhorizontalen H um einen vorgegebenen Winkel nach oben geschwenkt wird.

Im Rahmen der Erfindung liegen dabei selbstverständlich auch andere Kraftfahrzeugscheinwerfersysteme, bei denen eine Verschwenkung einer Lichtmodul-Lichtverteilung anders realisiert wird, bei denen beispielsweise eine Lichtmodul-Lichtverteilung durch ein Schwenken einer Linse, eines Spiegels oder eines Reflektors geschwenkt wird. Ebenso kann die Blendenkontur beim Einsatz einer Linse in dem Lichtmodul gegenüber der Darstellung in Figur 2 um 180 Grad gedreht ausgeführt sein.

## Patentansprüche

1. Kraftfahrzeugscheinwerfersystem
- mit einem ersten und einem zweiten Kraftfahrzeugscheinwerfer,
- wobei die Kraftfahrzeugscheinwerfer jeweils zumindest ein durch eine Schwenkeinrichtung (9) horizontal und/oder vertikal schwenkbares Lichtmodul (1) aufweisen,
- wobei die Lichtmodule jeweils eine Lichtmodul-Lichtverteilung erzeugen,
- mit einer Steuereinrichtung (8) zur Steuerung zumindest einer Schwenkeinrichtung (9) derart, dass durch die Lichtmodule (1) insgesamt eine Autobahnlichtverteilung realisiert wird, **dadurch gekennzeichnet, dass** zur Realisierung der Autobahnlichtverteilung die Lichtmodul-Lichtverteilung zumindest eines Lichtmoduls (1) des ersten Kraftfahrzeugscheinwerfers gegenüber einer Referenzvertikalen (V) nach links und gegenüber einer Referenzhorizontalen (H) nach unten geschwenkt wird.

2. Kraftfahrzeug nach Anspruch 1,
- bei dem zumindest ein Lichtmodul (1) des zweiten Kraftfahrzeugscheinwerfers zur Realisierung einer Autobahnlichtverteilung derart geschwenkt wird, dass die Lichtmodul-Lichtverteilung gegenüber einer Referenzhorizontalen (H) nach oben geschwenkt wird.

3. Kraftfahrzeug nach einem der vorhergehenden Ansprüche,
- bei dem zur Realisierung der Lichtmodul-Lichtverteilung eine Abblend-Vorrichtung (4) in einem Strahlengang zumindest eines Lichtmoduls (1) positionierbar ist.

4. Kraftfahrzeug nach einem der vorhergehenden Ansprüche,
- bei dem die Realisierung der Autobahnlichtverteilung automatisch basierend auf der Kraftfahrzeuggeschwindigkeit und/oder der Kraftfahrzeugposition ausgelöst wird.

## Claims

1. A motor vehicle headlight system
- with a first and second motor vehicle headlight,
- wherein the motor vehicle headlights in each case have at least one light module (1) which can be pivoted horizontally and/or vertically by a pivot device (9),
- wherein the light modules in each case produce a light module light distribution,
- with a control device (8) for controlling at least one pivot device (9) in such a way that overall a motorway light distribution is produced by the light module (1), **characterised in that**, in order to realise the motorway light distribution, the light module light distribution of at least one light module (1) of the first motor vehicle headlight is pivoted to the left relative to a reference vertical (V) and downwardly relative to a reference horizontal (H).

2. A motor vehicle according to claim 1,
- wherein at least one light module (1) of the second motor vehicle headlight is pivoted to realise a motorway light distribution in such a way that the light module light distribution is pivoted up relative to a reference horizontal (H).

3. A motor vehicle according to either of the preceding claims,
- wherein, to realise the light module light distribution, a dipping mechanism (4) can be positioned in a beam path of at least one light module (1).

4. A motor vehicle according to any one of the preceding claims,
- wherein the realisation of the motorway light distribution is triggered automatically based on the motor vehicle speed and/or the motor vehicle position.

## Revendications

1. Système de projecteurs de véhicule automobile comportant :
- un premier et un second projecteur,
- les projecteurs comportant chacun au moins un module lumineux (1) monté pivotant horizontalement et/ou verticalement par une installation de pivotement (9),
- les modules lumineux générant chacun une répartition lumineuse par module,
- une installation de commande (8) pour commander au moins une installation de pivotement (9) de façon que les modules lumineux (1) assurent globalement une distribution d'éclairage pour autoroute,
**caractérisé en ce que**
pour réaliser la distribution d'éclairage sur autoroute, la distribution de lumière des modules lumineux bascule au moins l'un des modules lumineux (1) du premier projecteur par rapport à une verticale de référence (V) vers la gauche et par rapport à une horizontale de référence (H) vers le bas.

2. Système de projecteurs de véhicule automobile selon la revendication 1,
**caractérisé en ce que**
pour au moins un module lumineux (1) du second projecteur, pour réaliser une distribution d'éclairage d'autoroute, le pivotement est tel que la répartition lumineuse du module lumineux soit relevée par rapport à la direction horizontale (H).

3. Système de projecteurs de véhicule automobile selon l'une des revendications précédentes,
**caractérisé en ce que**
pour réaliser la distribution de lumière du module lumineux, un dispositif anti-éblouissement (4) est positionné dans le chemin des rayons d'au moins un module lumineux (1).

4. Système de projecteurs de véhicule automobile selon l'une des revendications précédentes,
**caractérisé en ce que**
la réalisation de la distribution de lumière sur autoroute est déclenchée automatiquement en fonction de la vitesse du véhicule et/ou de la position du véhicule.
